(19) Europäisches Patentamt
European Patent Office
Office européen des brevets

(11) **EP 0 488 369 B1**

(12) **EUROPEAN PATENT SPECIFICATION**

(45) Date of publication and mention
of the grant of the patent:
**29.01.1997 Bulletin 1997/05**

(51) Int. Cl.$^6$: **B29C 41/28**, B29C 55/06

(21) Application number: **91120512.8**

(22) Date of filing: **29.11.1991**

(54) **Use of film obtained by a casting method as a retardation compensating film.**

Verwendung einer gegossenen Folie zum Ausgleich der Phasen-Verzögerung.

Utilisation d'un film obtenu par coulage pour compenser le décalage de phase.

(84) Designated Contracting States:
**DE GB**

(30) Priority: **30.11.1990 JP 330772/90**

(43) Date of publication of application:
**03.06.1992 Bulletin 1992/23**

(73) Proprietor: **FUJI PHOTO FILM CO., LTD.
Kanagawa (JP)**

(72) Inventor: **Yoshida, Toru,
c/o FUJI PHOTO FILM CO., LTD.
Minami-Ashigara-shi, Kanagawa (JP)**

(74) Representative: **Grünecker, Kinkeldey,
Stockmair & Schwanhäusser
Anwaltssozietät
Maximilianstrasse 58
80538 München (DE)**

(56) References cited:
**EP-A- 0 376 696          DE-A- 1 504 643
US-A- 2 698 967**

- **PATENT ABSTRACTS OF JAPAN vol. 13, no. 75
(P-831)21 February 1989 & JP-A63261201
(SUMITOMO CHEM.) 27 October 1988**

## Description

The present invention relates to the use of a film obtained by a casting method as a retardation compensating film

Conventionally, a retardation compensating film of a liquid crystal display is produced by expanding a film formed by a film casting method in the length or width direction in order to provide the film with birefringence characteristics.

It is important for the quality that the cast film utilizing the birefringence, in addition to transparency, is extended and expanded without unevenness; however, unevenness often occurs.

JP-A-63-261 201 discloses a method for producing an oriented film made of polyvinyl alcohol or its derivatives for use in a polarizing film.

It is the object of the present invention to provide a retardation compensating film in a liquid crystal display having better quality without being uneven.

It was found that the optical unevenness of the retardation compensating film is determined in a casting process, and that the unevenness is reduced to some degree by restricting the solvent quantity included in the cast film at the time of the expanding.

The object of the present invention is, thus, accomplished by the use of a film obtained by expanding a macromolecular film formed by a casting method, said macromolecular film having a solvent content of from 2 to 10% based on the solid content, as a retardation compensating film in a liquid crystal display.

As regards restricting the solvent content of the film formed by a film casting method to 2 - 10 % based on the solid content, it means that an orientation of the molecules is relaxed for a time during the expanding step. It means that the solvent quantity of reeled products is restricted during the casting, the quantity based on the solid content is restricted within 2 - 10 %, more preferably 2.5 - 7%. When the value is less than 2 %, the unevenness remains. When the value is more than 10%, the orientation of the molecules hardly occurs.

Further, in the present invention, the solvent content in the film formed by a film casting method indicates the content in the film just before the expanding step. A method of adjusting the solvent content within the aforesaid range during reeling after the film casting can be used, or a method of exposing the reeled film to the atmosphere of the solvent for adjusting the solvent content to the target value can be used.

As the expanding method in the present invention, a method providing an expanding device directly linked with the casting device for performing in on-line may be used. Otherwise, a method of using an expanding device after reeling the cast film may be used. The direction to expand the film is not restricted to the length direction or the width direction.

On the other hand, an expanding method in length direction by means of two rolls having different revolving speed as disclosed in Japanese Patent Unexamined Publication No. Sho. 63-189804, or an expanding method in width direction by Tenter method is used as the expanding method.

With respect to the film casting method, either a band type film casting method or a drum type film casting method may be used. A macromolecular solution is made to spread onto a running endless support of either band or drum, dried to some extent, stripped from the support, and after-dried to be formed as a cast film. The method is, for example, disclosed in Japanese Patent Unexamined Publication No. Hei. 2-111511.

As the macromolecular material used in the present invention, polystyrene, polymethyl methacrylate, polypropylene, polyvinyl chloride, styrene-acrylonitrile copolymer, polyethylene, polyacrylate, polyether sulfone, polyphenylene oxide, diacetyl cellulose and/or triacetyl cellulose may be used in addition to polycarbonate.

The organic solvent to be used according to the present invention may be selected from a compound having a chlorinated hydrocarbon group such as methylene chloride, a compound having a ketone group such as acetone or methyl ethyl ketone, and a compound having an aromatic group such as toluene.

Additionally, the solvent content based on the solid content indicates the solvent quantity included in the dried solute. Namely, when the solute is W (g), and the solvent quantity is w (g), the solvent content is indicated by the formula: $w/W \times 100$ (%).

The present invention will be described in more detail with reference to the Examples.

## Examples

The film forming method comprised the steps of making a methylene chloride solution of polycarbonate (18 weight percent) and spreading it onto a running support by using a die and drying the solution. Cast films having solvent content rates as shown in Table 1, respectively, in the reeling step were produced, and each film was expanded in length direction by an expanding device.

Table 1

| sample | solvent content rate in the reeling step |
|---|---|
| A | 1.5% |
| B | 4.0% |
| C | 7.0% |
| D | 11.0% |
| *(Based on the solid content) | |

Upon inspection of the surface during the reeling step by the film casting machine, Samples A - D comprised almost the same degree of unevenness. However, after the expanding step by the expanding device the results of Table 2 were obtained.

Table 2

| | sample | expanding rate | retardation (nm) | surface condition |
|---|---|---|---|---|
| Comparative Example 1 | A | 1.20 | 570 | large unevenness |
| Example 1 according to the invention | B | 1.25 | 570 | even or weak unevenness |
| Example 2 according to the invention | C | 1.35 | 570 | even or weak unevenness |
| Comparative Example 2 | D | 1.50 | 450 | large expansion and difficult orientation |

As can be seen in Sample A a retardation $[(Re=\Delta n.d) = (birefringence) \times (film\ thickness)]$ by the expanding step was observed but high unevenness remained. Samples B and C had a better surface quality, and the same retardation as for Sample A by means of the same expanding rate was obtained. With respect to Sample D, the film was expanded by the expanding step; however, because of the high amount of remaining solvent, an orientation hardly occurred.

Furthermore, Samples A', B', C', and D' which had the same expanding rate of 1.20 as Samples A, B, C and D and having solvent content rates in the reeling step as indicated in Table 1, were expanded resulting in retardation and surface conditions as shown in Table 3.

Table 3

| | sample | expanding rate | retardation (nm) | surface condition |
|---|---|---|---|---|
| Comparative Example 3 | A' | 1.20 | 570 | high retardation, but large unevenness |
| Example 3 according to the invention | B' | 1.20 | 420 | even or weak unevenness |
| Example 4 according to the invention | C' | 1.20 | 240 | even |
| Comparative Example 4 | D' | 1.20 | 100 | even, but low retardation |

Sample A', having a high retardation, but being largely uneven, cannot be used as a retardation compensating film. Sample D' is uniform (even) but has a low retardation. Sample C' and D' have a retardation for practical use and uniform surface condition. The retardation range for practical use as a retardation compensating film is generally 140 nm to 1000 nm.

By the use of a film according to the present invention, as shown in the examples, a retardation compensating film comprising high quality without the occurrence of unevenness can be obtained.

## Claims

1. Use of a film obtained by expanding a macromolecular film formed by a casting method, said macromolecular film having a solvent content of from 2 to 10% based on the solid content, as a retardation compensating film in a liquid crystal display.

2. The use of claim 1, wherein the macromolecular film comprises a polycarbonate.

3. The use of claim 2, wherein the macromolecular film comprises polystyrene, polymethyl methacrylate, polypropylene, polyvinyl chloride, styrene-acrylonitrile copolymer, polyethylene, polyacrylate polyether sulfone, polyphenylene oxide, diacetyl cellulose and/or triacetyl cellulose in addition to the polycarbonate.

4. The use of any of claims 1 to 3, wherein the solvent is an organic solvent.

5. The use of claim 4, wherein the solvent is selected from chlorinated hydrocarbons, ketones and aromatic compounds.

## Patentansprüche

1. Verwendung eines Films, der durch Dehnung eines durch ein Gußverfahren hergestellten makromolekularen Films erhalten wurde, wobei der makromolekulare Film einen Lösungsmittelgehalt von 2 - 10%, bezogen auf den Feststoffgehalt aufweist, als ein eine Phasenverzögerung ausgleichender Film in einer Flüssigkristallanzeige.

2. Verwendung nach Anspruch 1, wobei der makromolekulare Film ein Polycarbonat enthält.

3. Verwendung nach Anspruch 2, wobei der makromolekulare Film Polystyrol, Polymethylmethacrylat, Polypropylen, Polyvinylchlorid, ein Styrol-Acrylnitrilcopolymer, Polyethylen, Polyacrylat, Polyethersulfon, Polyphenylenoxid, Diacetylcellulose und/oder Triacetylcellulose zusätzlich zu dem Polycarbonat enthält.

4. Verwendung nach einem der Ansprüche 1 bis 3, wobei das Lösungsmittel ein organisches Lösungsmittel ist.

5. Verwendung nach Anspruch 4, wobei das Lösungsmittel aus chlorierten Kohlenwasserstoffen, Ketonen und aromatischen Verbindungen ausgewählt wird.

## Revendications

1. Utilisation d'un film obtenu en expansant un film macromoléculaire formé par un procédé de coulée, ledit film macromoléculaire ayant une teneur en solvant de 2 à 10 % par rapport à la teneur en solide, comme film compensateur de retard dans un afficheur à cristaux liquides.

2. Utilisation selon la revendication 1, où le film macromoléculaire comprend un polycarbonate.

3. Utilisation selon la revendication 2, où le film macromoléculaire comprend du polystyrène, poly(méthacrylate de méthyle), polypropylène, poly(chlorure de vinyle), copolymère styrène-acrylonitrile, polyéthylène, polyacrylate, polyéthersulfone, polyphénylèneoxyde, diacétyicellulose et/ou triacétylcellulose en plus du polycarbonate.

4. Utilisation selon l'une quelconque des revendications 1 à 3, où le solvant est un solvant organique.

5. Utilisation selon la revendication 4, où on choisit le solvant parmi les hydrocarbures chlorés, les cétones et les composés aromatiques.